(19) Europäisches Patentamt
European Patent Office
Office européen des brevets

(11) Publication number: 0 135 679
B1

(12) **EUROPEAN PATENT SPECIFICATION**

(45) Date of publication of patent specification: **16.09.87**

(51) Int. Cl.[4]: **C 08 L 69/00,** C 08 L 67/02, C 08 L 23/00

(21) Application number: **84107238.2**

(22) Date of filing: **23.06.84**

# (54) Compositions of polyester carbonate.

(30) Priority: **05.07.83 US 510600**

(43) Date of publication of application: **03.04.85 Bulletin 85/14**

(45) Publication of the grant of the patent: **16.09.87 Bulletin 87/38**

(84) Designated Contracting States: **DE FR IT NL**

(56) References cited:
**WO-A-83/01255**
**WO-A-84/01164**
**US-A-3 431 224**

**Patent Abstracts of Japan vol. 5, no. 4, 13 January 1981, JP-A-55-133445**

(73) Proprietor: **GENERAL ELECTRIC COMPANY**
**1 River Road**
**Schenectady New York 12305 (US)**

(72) Inventor: **Liu, Ping Yuan**
**124 Tanager Court**
**Naperville Illinois 60565 (US)**

(74) Representative: **Catherine, Alain et al**
**General Electric - Deutschland Munich Patent Operation Frauenstrasse 32**
**D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 135 679 B1

**Description**

The present invention relates to thermoplastic compositions having improved hydrolytic stability. More particularly, it relates to aromatic carbonate polymer resin mixtures with greater than 50 mole percent carbonate linkages having improved retained S-tensile impact strength after exposure to moisture for extended periods of time.

Aromatic carbonate polymers are well known, commerically available materials having a wide variety of applications in the plastics art. Such carbonate polymers may be prepared by reacting a dihydric phenol, such as 2,2-bis(4-hydroxyphenyl)propane, with a carbonate precursor, such as phosgene, in the presence of an acid binding agent. Generally speaking, aromatic polycarbonate resins offer a high resistance to the attack of mineral acids, may be readily molded, and are physiologically harmless as well as strain resistant. It is also known that the S-tensile impact properties of polycarbonate resins decrease upon prolonged exposure to moisture. Polycarbonate resins therefore do not perform as well as could be desired in outdoor uses where they will be exposed to extended weathering effects. These characteristics consequently limit the fields of application for unmodified aromatic polycarbonate resins.

In an effort to improve the behavior of polycarbonate resins, it has been prepared to add modifiers to the polycarbonate. In US—A—3,431,224, for example, it is proposed to add modifiers, in certain proportions, the modifiers comprising at least one member of the class consisting of polyethylene, polypropylene, polyisobutylene, a copolymer of ethylene and an ethyl acrylate, a copolymer of ethylene and propylene, a cellulose ester, a polyamide, a polyvinyl acetal, an alkyl cellulose ester, and a polyurethane elastomer to increase the stress cracking resistance. Although the results with such modifiers are generally excellent in thin sections, e.g., in parts of 3.2 mm thickness, there is a tendency for impact failure to occur with these modifiers in thicker molded parts of 6.4 mm or more, and such failure is of the undesirable brittle type.

Another modifier proposed to be added to polycarbonate is reported in Research Disclosure No. 20810, Dow Chemical Company, August 1981. Data are provided showing that polycarbonate modified with a linear low density polyolefin, namely ethylene/octene-1 copolymer, provide good impact strength at increased part thickness.

In US—A—4,245,058, it is disclosed that compositions comprising a high molecular weight aromatic polycarbonate, an acrylate copolymer and a polyolefin exhibit improved aged impact strength, both low and high temperature impact strength and good weld line strength as compared with unmodified polycarbonate.

Although many of the above-mentioned patents provide aromatic carbonate polymer compositions possessing good impact strength at room temperature and in thinner sections, and some possess good impact properties over broad temperature ranges and section thicknesses, generally, they all fail to address the problem of hydrolytic stability for polycarbonate compositions, and hydrolytically stable polycarbonate compositions are still desired.

Unexpectedly, in view of the foregoing, it has now been discovered that an aromatic carbonate polymer resin mixture comprising an admixture of an aromatic polycarbonate resin and a copolyestercarbonate wherein there is a preponderance of carbonate linkages as opposed to ester linkages in said admixture has improved retained S-tensile impact strength after prolonged exposure to moisture, when a hydrolytically stabilizing amount of a polyolefin resin, preferably a linear low density polyolefin resin is added to the mixture.

In accordance with the present invention there is an aromatic carbonate polymer composition comprising an admixture of

a. an aromatic polycarbonate

b. an aromatic copolyestercarbonate, and

c. a hydryolytic stabilizing effective amount of a polyolefin, wherein there is a preponderance of carbonate bonds as opposed to ester bonds in the total of a and b.

The phrase "preponderance of carbonate bonds as opposed to ester bonds" means that in the admixture of aromatic polycarbonate and copolyestercarbonate, greater than fifty (50) mole percent of the total ester and carbonate bonds should be carbonate. In other words there should be more "polycarbonate" than "polyester". When there are more carbonate bonds the admixture generally becomes more polycarbonate like and has more of the properties of polycarbonate. However when the polyolefin is added to the aromatic polycarbonate and copolyestercarbonate mixture the polycarbonate characteristics with respect to upgrading the 6.4 mm Notched Izod impact and double gate (weld line strength) impact are not observed. Rather the substantial increase in retained hydrolytic stability as shown in the S-tensile impact test is surprisingly observed.

The polyolefin employed in the invention is polyethylene, polypropylene and in general any polymer of a mono olefin having from two to eight carbon atoms, inclusive. Examples of such olefins include ethylene, propylene, butene-1, isobutene, 4-methyl-1-pentene and the like. Copolyolefins are also employed, particularly ethylene and propylene. Various densities of the polymers may be employed, however a linear low density polyolefin, particularly polyethylene is preferred.

The preferred linear low density polyolefin component may be prepared by state-of-the-art polymerization processes such as those described in US—A—4,076,698 and EP—A—4,645. The polymer

may have a density between 0.89 and 0.96 g./cc. and a controlled concentration of simple side chain branching as opposed to random branching which distinguishes it from polymers such as high pressure low density polyethylene and high density polyethylene. The preferred range of density is 0.915 to 0.945 g./cc. The linear low density polymers preferably are made from ethylene and an alpha olefin of $C_3$ to $C_8$ carbon content, e.g., butene-1 and octene-1, or mixtures of such alpha-olefins. The comonomer is used in a minor amount, e.g., 10 mole% or less of the total amount of monomers. A preferred range is about 1—3 mole%. Preferred copolymers are copolymers made from ethylene and butene-1 such as Escorene LPX-1® having a density of 0.910 g/cc; LPX 12 having a density of 0.912 g/cc and LPX®16 having a density of 0.916, from Exxon, Houston, Texas. Another preferred copolymer is a copolymer made from ethylene and octene-1, Dowlex® 61500 .42, Dow Chemical Company.

The aromatic polycarbonate resins for use herein as component (a)(i) may be prepared by reacting a dihydric phenol with a carbonate precursor, such as phosgene, a haloformate or a carbonate ester. Generally speaking, such carbonate polymers may be typified as possessing recurring structural units of the formula:

$$\left( O-A-O-\overset{\overset{O}{\|}}{C} \right) \qquad \text{I}$$

wherein A is a divalent aromatic radical of the dihydric phenol employed in the polymer producing reaction. Preferably, the carbonate polymers used to provide the resinous mixtures of the invention have an intrinsic viscosity (as measured in methylene chloride at 25°C.) ranging from 0.30 to 1.00 dl./g. The dihydric phenols which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are:

2,2-bis(4-hydroxyphenyl)propane (bisphenol A);
2,4'-dihydroxydiphenylmethane;
bis (2-hydroxyphenyl)methane;
bis (4-hydroxyphenyl)methane;
bis (4-hydroxy-5-propylphenyl)methane;
bis (4-hydroxy-2,6-dimethyl-3-methoxyphenyl)methane;
1,1-bis(4-hydroxyphenyl)ethane;
1,1-bis(4-hydroxy-2-ethylphenyl)ethane;
2,2-bis(3-phenyl-4-hydroxyphenyl)propane;
bis(4-hydroxyphenyl)cyclohexylmethane; and
2,2-bis(4-hydroxyphenyl)1-phenylpropane.

Bisphenols other than those having a carbon atom between the two phenols can also be employed. Examples of such groups of bisphenols include bis(hydroxyphenyl)sulfides, bis(hydroxyphenyl)ethers and bis(hydroxyphenyl)sulfoxides and the like.

Other dihydric phenols which are also suitable for use in the preparation of the above polycarbonates are disclosed in US—A—2,999,835; 3,038,365; 3,334,154 and 4,131,575.

These aromatic polycarbonates can be manufactured by known processes, such as, for example and as mentioned above, by reacting a dihydric phenol with a carbonate precursor, such as phosgene, in accordance with methods set forth in the above-cited literature and US—A—4,018,750 and 4,123,436, or by transesterification processes such as are disclosed in US—A—3,153,008, as well as other processes known to those skilled in the art.

Branched polycarbonates are also useful, such as are described in US—A—4,001,184. Also there can be utilized blends of a linear polycarbonate and a branched polycarbonate. Moreover, blends of any of the above materials may be employed in the practice of this invention to provide the aromatic polycarbonate. In any event, the preferred aromatic carbonate polymer for use as component (a)(i) herein is a homopolymer derived from 2,2-bis(4-hydroxyphenyl)propane (bisphenol-A).

The copolyestercarbonate resins for use in the subject invention may generally be described as copolyesters comprising recurring carbonate groups,

$$(O-\overset{\overset{O}{\|}}{C}-O)$$

carboxylate groups,

$$-\overset{\overset{O}{\|}}{C}-O$$

and aromatic carbocyclic groups in the linear polymer chain, in which at least some of the carboxylates

groups and at least some of the carbonate groups are bonded directly to ring carbon atoms of the aromatic carbocyclic groups. Usually, the copolyestercarbonate copolymers have from 25 to 90 percent ester bonds. These copolyestercarbonate copolymers, in general, are prepared by reacting a difunctional aromatic carboxylic acid, a dihydric phenol and a carbonate precursor.

The dihydric phenols useful in formulating the copolyestercarbonates for use herein may be represented by the general formula:

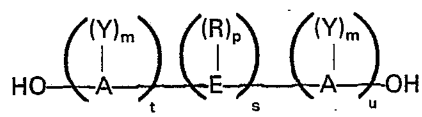
II

in which A is an aromatic group such as phenylene, biphenylene, naphthylene, anthrylene, etc. E may be an alkylene or alkylidene group such as methylene, ethylene, propylene, propylidene, isopropylidene, butylene, butylidene, isobutylidene, amylene, isoamylene, amylidene, isoamylidine, etc. Where E is an alkylene or alkylidene group, it may also consist of two or more alkylene or alkylidene groups, connected by a non-alkylene or nonalkylidene group such as an aromatic linkage, a tertiary amino linkage, in ether linkage, a carbonyl linkage, a silicon-containing linkage, or by a sulfur-containing linkage such as sulfide, sulfoxide, sulfone, etc. In addition, E may be a cycloaliphatic group (e.g., cyclopentyl, cyclohexyl), a sulfur-containing linkage, such as sulfide, sulfoxide or sulfone; an ether linkage; a carbonyl group; a tertiary nitrogen group; or a silicon-containing linkage such as silane or siloxy. Other groups which E may represent will occur to those skilled in the art, R is hydrogen or a monovalent hydrocarbon group such as alkyl (methyl, ethyl, propyl, etc.), aryl (phenyl, naphthyl, etc.), aralkyl (benzyl, ethylphenyl, etc.) or cycloaliphatic (cyclopentyl, cyclohexyl, etc.). Y may be an inorganic atom such as chlorine, bromine, fluorine, etc.; an inorganic group such as the nitro group, etc.; an organic group such as R above, or an oxy group such as OR, it being only necessary that Y be inert to and unaffected by the reactants and the reaction conditions. The letter m is any whole number from and including zero through the number of positions on A available for substitution; p is any whole number from and including zero through the number of available positions on E; t is a whole number equal to at least one, s is either zero or one, and u is any whole number including zero.

In the dihydric phenol compound represented by Formula II above, when more than one Y substituent is present, they may be the same or different. The same is true for the R substituant. Where s is zero in Formula II and u is not zero, the aromatic rings are directly joined with an intervening alkylene or other bridge. The positions of the hydroxyl groups and Y on the aromatic nuclear residues A can be varied in the ortho, meta, or para positions and the groupings can be in a vicinal, asymmetrical or symmetrical relationship, where two or more ring carbon atoms of the aromatic hydrocarbon residue are substituted with Y and hydroxyl group.

Examples of dihydric phenol compounds that may be employed in this invention include the same as previously mentioned for use in aromatic polycarbonates.

In general, any aromatic difunctional carboxylic acid or its reactive derivative such as the acid halide conventionally used in the preparation of polyesters may be used for the preparation of polyestercarbonates useful in formulating the compositions of the present invention. The aromatic dicarboxylic acids or their reactive derivatives such as the aromatic diacid halides are preferred as they produce the aromatic polyestercarbonates which are most useful, from the standpoint of physical properties, in the practice of the instant invention.

These carboxylic acids may be represented by the general formula:

$$R^2-\left(R^1\right)_q-COOH \qquad III$$

wherein $R^1$ represents an aromatic radical such as phenylene, naphthylene, bisphenylene, substituted phenylene, etc.; two or more aromatic groups connected through non-aromatic linkages such as those defined by E in Formula II; or a divalent aliphatic-aromatic hydrocarbon radical such as an aralkyl or alkaryl radical. $R^2$ is either a carboxyl or a hydroxyl group. The letter q represents the integer one where $R^2$ is a hydroxyl group and either zero or one where $R^2$ is a carboxyl group. Thus the difunctional carboxylic acid will either be a monohydroxy monocarboxylic acid or a dicarboxylic acid. For purposes of the present invention the aromatic dicarboxylic acids or their reactive derivatives such as, for example, the acid halides, are preferred. Thus in these preferred aromatic dicarboxylic acids, as represented by Formula III, $R^2$ is a carboxyl group and $R^1$ is an aromatic radical such as phenylene, biphenylene, naphthylene, substituted phenylene, etc., two or more aromatic groups connected through nonaromatic linkages; or a divalent aliphatic aromatic radical. Some nonlimiting examples of suitable preferred aromatic dicarboxylic acids which may be used in preparing the polyestercarbonate resins of the instant invention include phthalic acid, isophthalic acid, terephthalic acid, homophthalic acid, o-, m-, and p-phenylenediacetic acid, the polynuclear aromatic acids such as diphenic acid, and 1,4-naphthalic acid.

These acids may be used individually or as mixtures of two or more different acids.

The carbonate precursor may be either a carbonyl halide, a carbonate ester, or a haloformate. The carbonyl halides which can be employed herein are carbonyl chlorides and carbonyl bromide. Typical of the carbonate esters which may be employed herein are diphenyl carbonate, di(halophenyl)carbonates such as di(chlorophenyl)carbonate, di(bromophenyl)carbonate, di(trichlorophenyl)carbonate, di(tribromophenyl)carbonate, etc., di(alkylphenyl)carbonates such as di(tolyl)carbonate, etc., di(naphthyl)carbonate, di(chloronaphthyl)carbonate, phenyltolyl carbonate, chloronaphthyl chlorophenyl carbonate, and the like. The haloformates suitable for use herein include bishaloformates of dihydric phenols such as bischloroformates of hydroquinone, etc. or glycols such as bis-haloformates of ethylene glycol, neopentyl glycol, polyethylene glycol, etc. While other carbonate precursors will occur to those skilled in the art, carbonyl chloride, also known as phosgene is preferred.

The preparation of copolyestercarbonates which may be employed in the compositions of the present invention is described in US—A—3,030,331; 3,169,121; 3,207,814; 4,194,038 and 4,156,069.

A quite useful class of aromatic copolyestercarbonate is that derived from bisphenol A, isophthalic acid, terephthalic acid, or a mixture of isophthalic acid and terephthalic acid, or the reactive derivatives of these acids such as terephthaloyl dichloride, isophthaloyl dichloride, or a mixture of isophthaloyl dichloride and terephthaloyl dichloride, and phosgene.

As stated previously, there is a preponderance of carbonate bonds as opposed to ester bonds in the aromatic polycarbonate copolyestercarbonate admixture. The maximum percentage of carbonate bonds is that which allows significant retention of hydrolytic stability as measured in the S-tensile impact test but which does not provide polycarbonate-like impact behavior in the 6.4 mm Notched Izod or double gate test systems. Generally, this does not go beyond about 90 mole percent carbonate bonds, preferably about 85 mole percent. The lower limit is generally about 55 or preferably about 60 mole percent carbonate bonds.

With respect to the quantity of polyolefin employed in the composition, a hydrolytic stabilizing effective amount is employed. The precise quantity is dependent upon the specific composition of polycarbonate copolyestercarbonates employed. However, in general the range is from 0.1 to 5 weight percent, preferably from 0.5 to 2 weight percent. The weight percent of polyolefin is measured as weight percent of polycarbonate plus copolyestercarbonate. Below 0.1 weight percent little hydrolytic stabilization is generally observed. Above 5 weight percent, some decrease in other properties can occur.

The compositions of the invention are prepared by standard blending operations. The mixing of these materials may be accomplished by a variety of methods normally employed for incorporation of plasticizers or fillers into thermoplastic polymers, including but not limited to, mixing rolls, dough mixers, Banbury mixers, extruders, and other mixing equipment. The resulting mixtures may be handled in any conventional manner employed for the fabrication or manipulation of thermoplastic resins. The materials may be formed or molded using compression, injection, calendering, extrusion and blow molding techniques, alone or in any combination. Also multiprocessing methods, such as extrusion blow molding or co-extrusion-co-injection can be used, e.g., for multi-layer containers.

It should be understood that the resin mixtures prepared in accordance with the invention may also contain, in addition to the above-mentioned polymers, other additives to lubricate, reinforce, prevent oxidation, or lend color to the material. Other additives, such as mold release agents, stabilizers, and flame retardants are well known in the art, and may be incorporated without departing from the scope of the invention.

The resistance to impact failure of the aromatic carbonate resin mixtures prepared in accordance with the subject invention was determined in accordance with the Notched Izod Impact Test, ASTM D256 on molded test specimens in the form of bars of two sizes; 64 mm×12.8 mm×3.2 mm and 64 mm×12.8 mm×6.4 mm, the latter dimension being the specimen thickness. The test specimens were mounted in accordance with ASTM D256 procedures and were tested at room temperature. Izod impact strengths were determined for all specimens. The tensile impact strength of the polycarbonate resin mixtures prepared in accordance with the subject invention was determined in accordance with the Tensile-Impact Test, ASTM D-1822. In accordance with this test method a test specimen in the form of a thin strip or film is mounted between a pendulum head and crosshead clamp on the pendulum of an impact tester. The pendulum is released and carries the specimen and crosshead past a fixed anvil which halts the crosshead clamp. The pendulum head continues forward carrying the forward portion of the ruptured specimen. The energy loss (tensile impact energy) is recorded as well, whether the failure appears to be brittle or ductile type.

In order that those skilled in the art may better understand how the present invention may be practiced, the following Examples are given by way of illustration and not by way of limitation. All parts and percentages are by weight unless otherwise noted. The various polycarbonate resin mixtures were extruded in a Sterling extruder and molded in a 3 oz. Van Dorn injection molding machine, the processing temperatures for each operation were as indicated below.

Examples 1—6

In the following examples, many of the compositions prepared included a copolyestercarbonate intrinsic viscosity (I.V.) of about 0.5 dl/g as measured in methylene chloride at 30°C., namely Lexan® 3250, from General Electric Company. A substantially identical copolyestercarbonate resin for use herein may be prepared as follows:

To a reactor vessel is added 16 liters of methylene chloride, 8 liters of water, 1906 grams (8.36 moles) of

bisphenol A, 24 milliliters of triethylamine, 3.4 grams of sodium glyconate, and 65 grams of paratertiary-butylphenol chain terminator. At a pH of between about 9—10.5, 1089.6 grams (5.37 moles) of a mixture of 15% by weight of isophthaloyl dichloride and 85% by weight of terephthaloyl dichloride in 2 liters of methylene chloride is added over a 10 minute interval while controlling the pH at about 9—10.5 with 35% aqueous caustic. After the addition of the diacid chloride mixture, phosgene is added at a rate of 36 grams per minute for 12 minutes while controlling the pH at about 10—11 with 35% aqueous caustic. The polymer mixture is diluted with 2 liters of methylene chloride and the brine phase is separated. The resulting polymer phase is washed once with 0.1 HCl and three times with water and is then recovered by high steam precipitation to yield a white powder. This copolyestercarbonate has molar ratios of dihydroxy-diaryl units to benzene dicarboxylate units to carbonate units of about 1:0.64:0.36 and a molar ratio of terephthalate units to isophthalate units of about 8.5:1.5.

The resin mixtures were prepared in the following manner:

An aromatic polycarbonate derived from 2,2-bis(4-hydroxyphenyl)propane and having an intrinsic viscosity (I.V.) in the range of from about 0.46 to about 0.49 dl/g as determined in a methylene chloride solution at 25°C. (Lexan® 140, General Electric Company) was mixed with a copolyestercarbonate (Lexan® 3250, General Electric Company). The above components were tumbled in a laboratory tumbler until well mixed. One of each of the following low density polyolefin resin impact modifiers were added to the polycarbonate resin blends:

(a) Escorene® LPX 1, a copolymer of ethylene and butene-1 having a density of 0.910, Exxon Corporation; and

(b) Escorene® LPX 12, a copolymer of ethylene and butene-1 having a density of 0.912, Exxon Corporation. The ingredients were then blended together by mechanically mixing them in a laboratory tumbler and the resulting mixture was fed to an extruder which was operated at about 282°C. The resulting extrudates were comminuted into pellets. The pellets were injection molded at about 260°C. into test specimens of about 64 mm×12.8 mm×3.2 mm and 64 mm×12.8 mm×6.4 mm, the latter dimension being specimen thickness. Where indicated, Izod impact strengths of these specimens were measured according to the Notched Izod test, ASTM D256. The weld line strength of the samples was measured with the specimens prepared in a double gate mold in the same way as the Notched Izod samples. When polymer melt was injected through the gates, a weld line was then formed in the center of the sample. Measurements were made according to ASTM D256. The numerical superscripts indicate the percent of test specimens which were ductile and the superscript H indicates that the sample failed in a hinged mode, which is an improvement over brittle failure. The S-tensile impact was measured on 0.08 mm (3 mil) specimens according to the Tensile Impact Test, ASTM D-1822. Some of the samples were immersed in a water bath at 82°C. for a period of 14 days and Tensile Impact Test ASTM D-1822 was performed on the moisture exposed test specimens. The samples labeled control are bisphenol A polycarbonate/copolyestercarbonate blends containing no polyolefin.

Formulations A, 1 and 2 employed 20 weight percent polycarbonate and 80 weight percent copolyestercarbonate.

Formulations B, 3 and 4 employed 45 weight percent polycarbonate and 55 weight percent copolyestercarbonate.

Formulations C, 5 and 6 employed 60 weight percent polycarbonate and 40 weight percent copolyestercarbonate. Examples of the calculation converting weight percent to mole percent are shown below for A.

$$\frac{200\ \text{grams}}{254\ \text{grams/mole bisphenol A polycarbonate of preparation}} = .79\ \text{moles carbonate}$$

$$\frac{800\ \text{grams}}{354\ \text{grams/mole copolyestercarbonate of preparation}} = 2.14\ \text{moles carbonate and ester}$$

2.14 moles carbonate and ester×.36 carbonate=.77 mole carbonate

.79 moles carbonate from polycarbonate
.77 moles carbonate from copolyestercarbonate

1.56 total moles carbonate

$$\frac{1.56}{2.93} = 53.3\%\ \text{carbonate}$$

TABLE 1

Polycarbonate resin modified with a poly(ester-carbonate) copolymer resin and a polyolefin resin

| Example<br>Composition (pbw) | A* | 1 | 2 | B* | 3 | 4 | C* | 5 | 6 |
|---|---|---|---|---|---|---|---|---|---|
| Mole percent carbonate bond | 53.3 | 53.3 | 53.3 | 71 | 71 | 71 | 80 | 80 | 80 |
| Polyolefin resin<br>LPX 1 | — | 1.0 | — | — | 1.0 | — | — | 1.0 | — |
| LPX 12 | — | — | 1.0 | — | — | 1.0 | — | — | 1.0 |
| Properties<br>DTUL, at 264 psi, °C. | 156.8 | 160.0 | 157.7 | 149.5 | 149.6 | 148.4 | 145.5 | 145.0 | 145.0 |
| Room Temp. Impact Strength<br>3.2 mm Notched Izod, kgf cm/cm notch | $36^{\circ}$ | $35^{\circ}$ | $37^{60H}$ | $47^{60H}$ | $47^{60H}$ | $46^{100H}$ | $54^{100H}$ | $51^{100H}$ | $54^{100H}$ |
| 6.4 mm Notched Izod, kgf cm/cm notch | $30^{\circ}$ | $24^{\circ}$ | $28^{\circ}$ | $36^{\circ}$ | $23^{\circ}$ | $24^{\circ}$ | $31^{\circ}$ | $21^{\circ}$ | $21^{\circ}$ |
| 3.2 mm Double Gate unnotched, Izod ft.lbs. | $33.6^{40}$ | $27.3^{\circ}$ | $32.2^{\circ}$ | $37.5^{100}$ | $36.3^{100}$ | $36.4^{100}$ | $40.0^{100}$ | $40.0^{100}$ | $40.0^{100}$ |
| S-Tensile Impact Strength, kgf cm/cm² | 555 | 647 | 636 | 559 | 511 | 720 | 585 | 647 | 574 |
| S-Tensile Impact Strength<br>after immersion in $H_2O$<br>at 82°C for 14 days, kgf cm/cm² | 91 | 415 | 403 | 107 | 388 | 370 | 110 | 368 | 461 |
| % Retained S-Tensile impact<br>strength after immersion | 16.5 | 64. | 63.2 | 19.2 | 76. | 51.2 | 18.8 | 56.8 | 80.5 |

*Control—no polyolefin added

The compositions prepared in accordance with the subject invention exhibit unexpectedly improved retention of tensile impact strength after immersion in water at 82°C. For 14 days as compared with controls A, B and C. It is noted that in this mixture of aromatic polycarbonate and aromatic copolyestercarbonate the quantities of polyolefin which demonstrate substantial retention of S-tensile impact strength generally do not provide increased double gate impact values and lower somewhat the 6.4 mm Notched Izod impact values. Since there is a preponderance of carbonate bonds, polycarbonate like behavior is generally expected and is not observed.

Each of the above-mentioned patents, applications and publications are specifically incorporated herein by reference. Although the subject invention has been described with reference to certain preferred embodiments, many obvious modifications or changes may be made therein or will suggest themselves to those skilled in the art. For example, instead of a bisphenol A polycarbonate, one containing units derived from tetramethylbisphenol A or from dixylenol sulfone can be used as component (a)(i). Instead of a polyestercarbonate based on terephthalate and isophthalate units, naphthenate units may be substituted for either. Instead of a copolymer of ethylene and butene-1, a copolymer of propylene and butene-1, or octene-1 could be used, to name but a few of the variations possible.

**Claims**

1. An aromatic carbonate polymer composition comprising an admixture of
a. an aromatic polycarbonate
b. an aromatic copolyestercarbonate and
c. hydrolytic stabilizing effective amount of a polyolefin,
wherein there is a preponderance of carbonate bonds as opposed to ester bonds in the total of a and b.

2. A composition in accordance with claim 1 wherein the carbonate bonds are from 55 to 90 percent of the bonds in a and b.

3. A composition in accordance with claim 1 wherein the dihydric phenol of the aromatic polycarbonate is a 4,4-dihydroxy-di(mononuclear aryl)alkane.

4. A composition in accordance with claim 1 wherein the aromatic copolyestercarbonate has from 25 to 90 percent ester bonds.

5. A composition in accordance with claim 2 wherein the dihydric phenol of the aromatic polycarbonate is bisphenol A.

6. A composition in accordance with claim 1 wherein the polyolefin is from 0.1 to 5 weight percent of a and b.

7. A composition in accordance with claim 2 wherein the polyolefin is from 0.1 to 5 weight percent of a and b.

8. A composition in accordance with claim 7 wherein both the aromatic polycarbonate and the aromatic copolyestercarbonate are derived from 4,4'-dihydroxy(mononuclear aryl)alkane.

9. A composition in accordance with claim 8 wherein the aromatic copolyestercarbonate is derived from isophthalic acid or reactive derivatives thereof or mixtures of isophthalic acid or reactive derivative thereof and up to 90 mole percent of terephthalic acid or reactive derivative thereof.

10. A composition in accordance with claim 9 wherein the aromatic copolyestercarbonate has from 25 to 90 mole percent ester.

11. A composition in accordance with claim 10 wherein the polyolefin is polyethylene, polypropylene, a copolymer of ethylene and propylene, or linear low density polyethylene wherein the comonomer of the linear low density polyethylene is derived from a $C_3$—$C_8$ alpha olefin.

12. A composition in accordance with claim 11 wherein the dihydric phenol of the aromatic polycarbonate and aromatic copolyestercarbonate is bisphenol A.

13. A composition in accordance with claim 12 wherein the polyolefin is linear low density polyethylene.

14. A composition in accordance with claim 13 wherein the linear low density polyethylene is from 0.5 to 2 weight percent.

15. A composition in accordance with claim 14 wherein the comonomer of the linear low density polyethylene is butene-1.

**Patentansprüche**

1. Aromatische Carbonatpolymer-Zusammensetzung umfassend eine Mischung von
(a) einem aromatischen Polycarbonat,
(b) einem aromatischen Copolyestercarbonat und
(c) eine Menge an Polyolefin, die wirksam ist, um gegen Hydrolyse zu stabilisieren,
worin in der Gesamtmenge von (a) und (b) die Carbonatbindungen gegenüber den Esterbindungen überwiegen.

2. Zusammensetzung nach Anspruch 1, worin die Carbonatbindungen 55 bis 90% der Bindungen in (a) und (b) betragen.

3. Zusammensetzung nach Anspruch 1, worin das zweiwertige Phenol des aromatischen Polycarbonats ein 4,4-Dihydroxy-di(einkerniges-aryl)alkan ist.

4. Zusammensetzung nach Anspruch 1, worin das aromatische Copolyestercarbonat von 25 bis 90% Esterbindungen besitzt.

5. Zusammensetzung nach Anspruch 2, worin das zweiwertige Phenol des aromatischen Polycarbonats Bisphenol-A ist.

6. Zusammensetzung nach Anspruch 1, worin das Polyolefin 0,1 bis 5 Gew.-% von (a) und (b) beträgt.

7. Zusammensetzung nach Anspruch 2, worin das Polyolefin von 0,1 bis 5 Gew.-% von (a) und (b) beträgt.

8. Zusammensetzung nach Anspruch 7, worin das aromatische Polycarbonat als auch das aromatische Copolyestercarbonat von 4,4'-Dihydroxy(einkerniges aryl)-alkan abgeleitet sind.

9. Zusammensetzung nach Anspruch 8, worin das aromatische Copolyestercarbonat abgeleitet ist von Isophthalsäure oder reaktionsfähigen Derivaten derselben oder Mischungen von Isophthalsäure oder reaktionsfähigen Derivaten derselben und bis zu 90 Mol-% Terephthalsäure oder reaktionsfähigen Derivaten derselben.

10. Zusammensetzung nach Anspruch 9, worin das aromatische Copolyestercarbonat von 25 bis 90 Mol-% Ester enthält.

11. Zusammensetzung nach Anspruch 10, worin das Polyolefin Polyäthylen, Polypropylen, ein Copolymer von Äthylen und Propylen oder ein lineares Polyäthylen niedriger Dichte ist, worin das Comonomer des linearen Polyäthylens niedriger Dichte von einem $C_3$—$C_8$-α-Olefin abgeleitet ist.

12. Zusammensetzung nach Anspruch 11, worin das zweiwertige Phenol des aromatischen Polycarbonats und aromatischen Copolyestercarbonats Bisphenol-A ist.

13. Zusammensetzung nach Anspruch 12, worin das Polyolefin ein lineares Polyäthylen niedriger Dichte ist.

14. Zusammensetzung nach Anspruch 13, worin das lineare Polyäthylen niedriger Dichte 0,5 bis 2 Gew.-% beträgt.

15. Zusammensetzung nach Anspruch 14, worin das Comonomer des linearen Polyäthylens niedriger Dichte Buten-1 ist.

**Revendications**

1. Composition de polymères de carbonate aromatiques, comprenant un mélange de:
a) un polycarbonate aromatique;
b) un copolyester-carbonate aromatique; et
c) une quantité efficace de stabilisation contre l'hydrolyse d'une polyoléfine,
dans laquelle les liaisons carbonate sont prépondérantes par rapport aux liaisons ester dans l'ensemble des composants a et b.

2. Composition suivant la revendication 1, dans laquelle les liaisons carbonate, forment de 55 à 90% des liaisons dans les composants a et b.

3. Composition suivant la revendication 1, dans laquelle le diphénol du polycarbonate aromatique est un 4,4-dihydroxy-di(monocyclique aryle) alcane.

4. Composition suivant la revendication 1, dans laquelle le copolyester-carbonate aromatique comporte de 25 à 90% de liaisons ester.

5. Composition suivant la revendication 2, dans laquelle le diphénol du polycarbonate aromatique, est du bisphénol A.

6. Composition suivant la revendication 1, dans laquelle la polyoléfine, représente de 0,1 à 5% en poids par rapport aux composants a et b.

7. Composition suivant la revendication 2, dans laquelle la polyoléfine représente de 0,1 à 5% en poids par rapport aux composants a et b.

8. Composition suivant la revendication 7, dans laquelle le polycarbonate aromatique et le copolyester-carbonate aromatique sont tous deux dérivés du 4,4'-dihydroxy (aryle monocyclique) alcane.

9. Composition suivant la revendication 8, dans laquelle le copolyester-carbonate aromatique est dérivé de l'acide isophtalique ou de dérivés réactifs de celui-ci, ou de mélanges d'acide isophtalique ou d'un dérivé réactif de celui-ci et de jusqu'à 90% en moles d'acide téréphtalique ou d'un dérivé réactif de celui-ci.

10. Composition suivant la revendication 9, dans laquelle le copolyester-carbonate aromatique, comporte de 25 à 90% en moles d'ester.

11. Composition suivant la revendication 10, dans laquelle lu polyoléfine, est un polyéthylène, un polypropylène, un copolymère d'éthylène et de propylène, ou un polyéthylène linéaire de basse densité, le comonomère du polyéthylène linéaire de basse densité étant dérivé d'une alpha-oléfine en $C_3$—$C_8$.

12. Composition suivant la revendication 11, dans laquelle le diphénol du polycarbonate aromatique et du copolyester-carbonate aromatique, est du bisphénol A.

13. Composition suivant la revendication 12, dans laquelle la polyoléfine est un polyéthylène linéaire de basse densité.

14. Composition suivant la revendication 13, dans laquelle le polyéthylène linéaire de basse densité, est présent en une quantité de 0,5 à 2% en poids.

15. Composition suivant la revendication 14, dans laquelle le comonomère du polyéthylène linéaire de basse densité, est du butène-1.